# EUROPEAN PATENT SPECIFICATION

(11) **EP 3 572 357 B1**
(45) Date of publication and mention of the grant of the patent: **24.03.2021**
(21) Application number: 19176407.5
(22) Date of filing: 24.05.2019
(51) Int. Cl.: B65G 15/42, F16G 3/08

(54) **LOOPED COGGED BELT WITH AN OPENABLE JOINT**
SCHLEIFENZAHNRIEMEN MIT EINER ZU ÖFFNENDEN VERBINDUNG
COURROIE CRANTÉE EN BOUCLE AYANT UN JOINT OUVRABLE

(30) Priority: 25.05.2018 IT 201800005717
(43) Date of publication of application: 27.11.2019
(73) Proprietor: Rubino, Attilio, 40011 Anzola Emilia (BO) (IT)
(72) Inventor: Rubino, Attilio, 40011 Anzola Emilia (BO) (IT)
(74) Representative: Dall'Olio, Christian

(56) References cited:
- EP-A2- 2 108 860
- WO-A2-2010/015919
- JP-A- 2004 292 138
- US-A- 5 092 823
- US-B2- 8 714 345

## Description

### DESCRIPTION OF THE INVENTION

The present invention relates to the technical sector concerning looped cogged belts for conveyors and/or for the transmission of power. In particular, the present invention relates to a looped cogged belt with an openable joint.

A looped cogged belt with an openable joint comprises a first joint end and a second joint end which are couplable and decouplable with respect to one another. When the first joint end and the second joint end are coupled to one another, the cogged belt is loop-closed and can be activated. To facilitate the installation or removal of the cogged belt on a conveyor, for example, it is possible to priorly decouple the first joint end and the second joint end from one another, which enables saving time and the tools used for this purpose.

US5092823A discloses a looped cogged belt with an openable joint according to the preamble of claim 1.

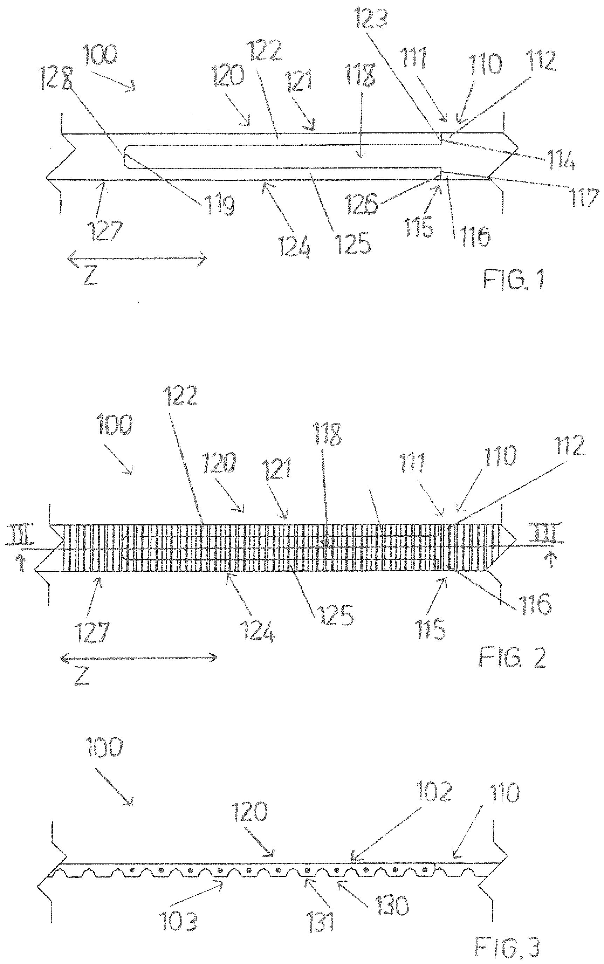

Also, a looped cogged belt with an openable joint (100) of known type is illustrated in figures 1-3 and comprises a base layer (102) and a plurality of teeth (103) (see figure 3) which rise from the base layer (102) and a first joint end (110) which, in time, comprises: a first joint portion (111) which forms a first flank (112) of the first joint end (113) and which comprises a first front wall (114); a second joint portion (115) which forms a second flank (116), opposite the first flank (112) of the first joint end (110), and which comprises a second front wall (117); a third joint portion (118) which is interposed between the first joint portion (111) and the second joint portion (115), which projects longitudinally with respect to the first joint portion (111) and to the second joint portion (115) and which comprises a third front wall (119). The looped cogged belt (100) further comprises a second joint end (120) which, in turn, comprises: a fourth joint portion (121) which forms a third flank (122) of the second joint end (120) and which comprises a fourth front wall (123); a fifth joint portion (124) which forms a fourth flank (125), opposite the third flank (122) of the second joint end (120), and which comprises a fifth front wall (126); a sixth joint portion (127) which is interposed between the fourth joint portion (121) and the fifth joint portion (124) and which comprises a sixth front wall (128). The fourth joint portion (121) and the fifth joint portion (124) project longitudinally with respect to the sixth joint portion (127). The first joint end (110) and the second joint end (120) are complementary to one another and are couplable to one another so that the first front wall (114) abuts the fourth front wall (123), the second front wall (117) abuts the fifth front wall (126) and the third front wall (119) abuts the sixth front wall (128) so that the looped cogged belt (100) is loop-closed. The looped cogged belt (100) further comprises a plurality of through-holes (130) which are afforded in the teeth of the plurality of teeth (131) of the first joint end (110) and of the second joint end (120) transversally to the extension direction (Z) of the looped cogged belt (100); a plurality of cables (131) which are insertable in the through-holes of the plurality of through-holes (130) so as to fix the first joint end (110) and the second joint end (120) to one another when the first joint end (110) and the second joint end (120) are coupled to one another.

When the above-mentioned looped cogged belt is mounted on at least two pulleys and then set in traction on the two pulleys, it can be subject to longitudinal stresses that might vary in a way that is not uniform transversally to the extension direction of the looped cogged belt. Further, during the winding of the first joint end and of the second joint end, when coupled to one another, on a cogged pulley, in particular on a cogged pulley having a small diameter and in the above-described conditions, there might be a raising of the third front wall, which would tend to distance from the volume of the looped cogged belt. In the same way, there might be a raising of the fourth front wall and the fifth front wall. The raising of the third front wall, of the fourth front wall and of the fifth front wall might in turn cause a dealignment of the teeth of the plurality of teeth of the looped cogged belt and a dealignment of the third joint portion, of the fourth joint portion and of the fifth joint portion with respect to the remaining regions of the looped cogged belt.

Consequently, the above-mentioned dealignment of the teeth of the plurality of teeth of the looped cogged belt might cause an incorrect enmeshing of the looped cogged belt with the teeth of the pulley on which it is wound.

In turn, a wrong enmeshing of the looped cogged belt with the teeth of the pulley on which it is wound, might cause the breakage of the teeth of the plurality of teeth that are part of the first joint end and the second joint end and respectively proximal to the third front wall and the fourth front wall and the fifth front wall. In these situations, in the most serious cases there might be a complete breakage of the looped cogged belt, following the impact of regions of looped cogged belt, in particular the regions that are brought out of the volume of the looped cogged belt, on external components to the looped cogged belt, for example on components of the pulleys on which it is arranged and/or of the conveyor on which it is mounted. In the light of the above, the aim of the present invention consists in obviating the above-mentioned drawbacks.

The above aims are attained by a looped cogged belt with an openable joint according to claim 1.

The first false tooth and the first fastening means advantageously prevent the raising of the third front wall and the second false tooth and the second fastening means prevent the raising, contemporaneously, of the fourth front wall and the fifth front wall, during the winding of the first joint end and the second joint end, when coupled to one another, on the cogged pulley on which the looped cogged belt is arranged.

The looped cogged belt with the openable joint of the invention ensures the planarity of the upper surface of the looped cogged belt at the openable joint.

Specific embodiments of the invention will be described in the following part of the present description, according to what is set down in the claims and with the aid of the accompanying tables of drawings, in which:
- figures 1 and 2 are lateral views of a looped cogged belt with an openable joint of known type;
- figure 3 is a section view, taken along the plane III-III of figure 2;
- figures 4 and 5 are lateral views of a first embodiment of the looped cogged belt with an openable joint of the present invention;
- figure 6 is a section view, taken along plane VI-VI of figure 4;
- figure 7 is an enlarged view of detail K of figure 6;
- figures 8 and 9 are larger-scale views of two embodiments of a false tooth and a fastening member;
- figures 10 and 11 are lateral views of further embodiments of the looped cogged belt with an openable joint of the present invention;
- figure 12 is a perspective view of the looped cogged belt with an openable joint of the present invention;
- figure 13 is a exploded perspective view of the looped cogged belt with an openable joint of the present invention, in which some parts have been omitted to better evidence others;
- figure 14 is an enlarged view of detail W of figure 13.

With reference to the appended tables of drawings, reference numeral (1) denotes a looped cogged belt with an openable joint.

It is stressed that in the description that follows reference will be made to lengths of looped cogged belt (1) with an openable joint (60).

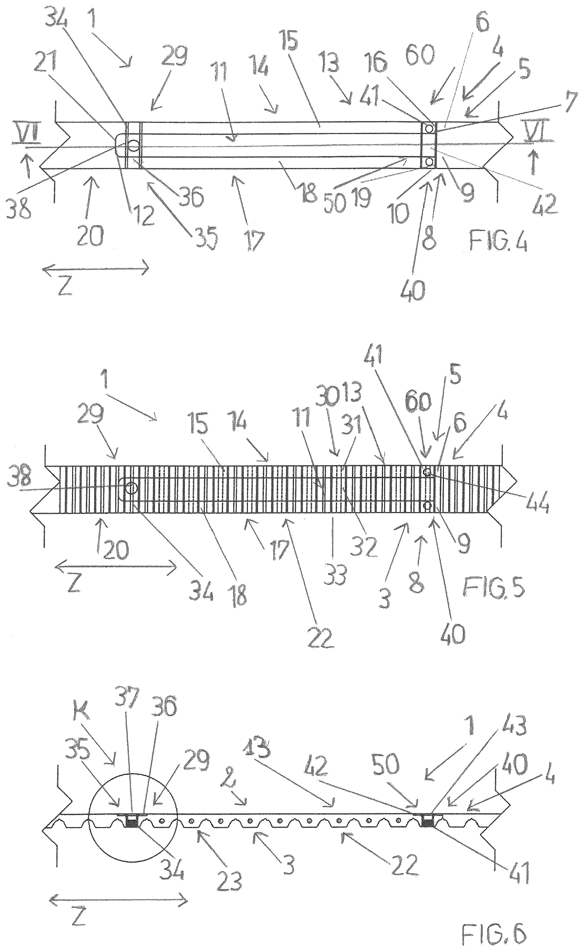

A looped cogged belt (1) with an openable joint (60) comprises a base layer (2) and a plurality of teeth (3) that emerge from the base layer (2); a first joint end (4) which in turn comprises: a first joint portion (5) which forms a first flank (6) of the first joint end (4) and which comprises a first front wall (7); a second joint portion (8) which forms a second flank (9), opposite the first flank (6) of the first joint end (4), and which comprises a second front wall (10); a third joint portion (11) which is interposed between the first joint portion (5) and the second joint portion (8), which projects longitudinally with respect to the first joint portion (5) and to the second joint portion (8) and which comprises a third front wall (12). Further, the looped cogged belt (1) comprises a second joint end (13) which comprises: a fourth joint portion (14) which forms a third flank (15) of the second joint end (13) and which comprises a fourth front wall (16); a fifth joint portion (17) which forms a fourth flank (18), opposite the third flank (15) of the second joint end (13) and which comprises a fifth front wall (19); a sixth joint portion (20) which is interposed between the fourth joint portion (14) and the fifth joint portion (17) and which comprises a sixth front wall (21). The fourth joint portion (14) and the fifth joint portion (17) project longitudinally with respect to the sixth joint portion (20) and the first joint end (4) and the second joint end (13) are complementary to one another and are couplable to one another so that the first front wall (7) abuts the fourth front wall (16), the second front wall (10) abuts the fifth front wall (19) and the third front wall (12) abuts the sixth front wall (21) so that the cogged belt (1) is loop-closed (see figures 4, 5 and 12). Further, the looped cogged belt (1) comprises a plurality of through-holes (22) which are afforded in the teeth of the plurality of teeth (3) of the first joint end (4) and of the second joint end (13) transversally to the extension direction (Z) of the looped cogged belt (1) and comprises a plurality of cables (23) which are insertable in the through-holes of the plurality of through-holes (22) so as to fix the first joint end (4) and the second joint end (13) to one another when the first joint end (4) and the second joint end (13) are coupled to one another (see figure 6).

The looped cogged belt (1) with an openable joint (60) further comprises a first false tooth (29); the first joint end (4) and the second joint end (13) are provided with a first smooth area (34) for receiving in abutment the first false tooth (29) and thus re-establishing the continuity of the teeth of the plurality of teeth (3) (see figure 4), the first smooth area (34) being arranged in proximity of the third front wall (12) and extending through the fourth joint portion (14), the third joint portion (11) and the fifth joint portion (17) (see figures 4 and 5); it comprises first fastening means (35) for fixing the first false tooth (29) to the first smooth area (34) when the first joint end (4) and the second joint end (13) are coupled to one another, so as to obtain the fastening of the first joint end (4) and the second joint end (13) to one another (see figure 6); and comprises a second false tooth (40); the first joint end (4) and the second joint end (13) are provided with a second smooth area (41) for receiving in abutment the second false tooth (40) and thus re-establishing the continuity of the teeth of the plurality of teeth (3), the second smooth area (41) being arranged in proximity of the fourth front wall (16) and the fifth front wall (19) and extending through the fourth joint portion (14), the third joint portion (11) and the fifth joint portion (17); it comprises second fastening means (50) for fixing the second false tooth (40) to the second smooth area (41) when the first joint end (4) and the second joint end (13) are coupled to one another, so as to obtain the fastening of the first joint end (4) and the second joint end (13) to one another (see figures 4 and 5). The false teeth comprised are exclusively the first false tooth (29) and the second false tooth (40).

The first false tooth (29) can replace a tooth of the plurality of teeth (3) which is part of the first joint end (4) and the second joint end (13) and which is proximal to the third front wall (12).

In the same way, the second false tooth (40) can replace a tooth of the plurality of teeth (3) which is part of the first joint end (4) and the second joint end (13) and which is proximal to the fourth front wall (16) and the fifth front wall (19).

The looped cogged belt (1) with an openable joint (60) preferably comprises a first fastening member (36) which is positionable opposite the first false tooth (29) when the first joint end (4) and the second joint end (13) are coupled to one another in such a way that the first joint end (4) and the second joint end (13) are interposed between the first false tooth (29) and the first fastening member (36); it comprises a first locking element (37) for locking the first false tooth (29) and the first fastening member (36) against the first joint end (4) and the second joint end (13) when the first joint end (4) and the second joint end (13) are coupled to one another, so as to obtain the fastening of the first joint end (4) and the second joint end (13) to one another (see figures 4 and 5).

The first fastening member (36) preferably forms a plate.

The first fastening member (36) advantageously ensures the fixing of the first false tooth (29) to the first joint end (4) and the second joint end (13), when the first joint end (4) and the second joint end (13) are coupled to one another, guaranteeing reliable performance of the looped cogged belt (1) during use in a conveyor, for example.

The looped cogged belt (1) preferably comprises a second fastening member (42) which is positionable opposite the second false tooth (40) when the first joint end (4) and the second joint end (13) are coupled to one another in such a way that the first joint end (4) and the second joint end (13) are interposed between the second false tooth (40) and the second fastening member (42); it comprises a second locking element (43) for locking the second false tooth (40) and the second fastening member (42) against the first joint end (4) and the second joint end (13) when the first joint end (4) and the second joint end (13) are coupled to one another, so as to obtain the fastening of the first joint end (4) and the second joint end (13) to one another.

The second fastening member (42) preferably forms a plate.

The second fastening member (42) advantageously ensures the fixing of the second false tooth (40) to the first joint end (4) and the second joint end (13), when the first joint end (4) and the second joint end (13) are coupled to one another, guaranteeing reliable performance of the looped cogged belt (1) during use in a conveyor, for example.

The first fastening member (36) and the second fastening member (42), since they form a plate, advantageously guarantee the planarity of the upper surface of the looped cogged belt (1).

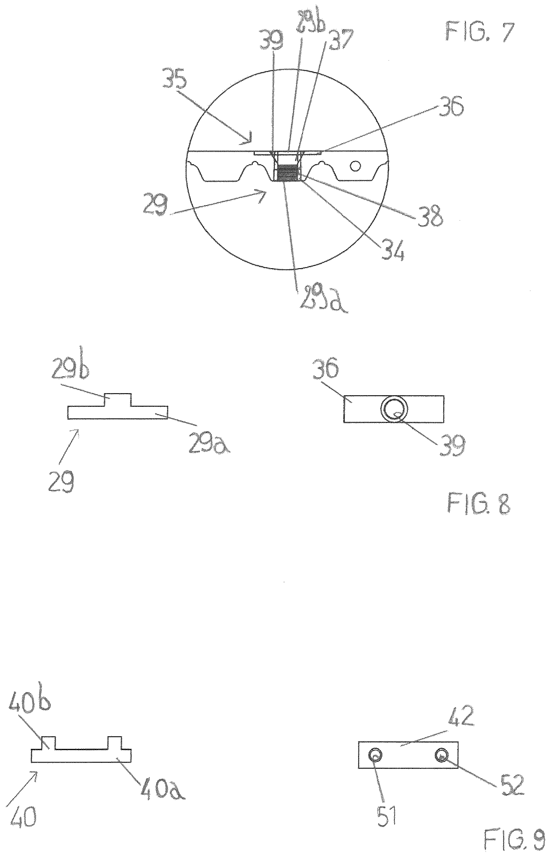

The first joint end (4) or the second joint end (13) is preferably provided with a first through-hole (38) afforded at the first smooth area (34) (see figure 5); the first false tooth (29) comprises a first base (29a) which forms a tooth of the plurality of teeth (3) of the looped cogged belt (1) and a first seating (29b) for receiving the first locking element (37); the first seating (29b) projects from the relative first base (29a) and is insertable in the first through-hole (38) of the first joint end (4) or of the second joint end (13) (see figures 7 and 8); the first fastening member (36) is provided with a second through-hole (39) and is positioned opposite the first false tooth (29) so that the second through-hole (39) is coaxial to the first through-hole (38) so that the first locking element (37) can insert in the second through-hole (39) and in the first seating (29b) of the first false tooth (29), when the first seating (29b) is inserted in the first through-hole (38), locking the first false tooth (29) and the first fastening member (36) to one another (see figures 4-7 and 8).

The second joint end (13) is preferably provided with a third through-hole (44) afforded at the second smooth area (41); the second false tooth (40) comprises a second base (40a) which forms a tooth of the plurality of teeth (3) of the looped cogged belt (1) and a second seating (40b) for receiving the second locking element (43); the second seating (40b) projects from the relative second base (40a) and is insertable in the third through-hole (44) of the second joint end (13); the second fastening member (42) is provided with a fourth through-hole (51) and is positioned opposite the second false tooth (40) so that the fourth through-hole (51) is coaxial to the third through-hole (44) so that the second locking element (43) can insert in the third through-hole (44) and in the second seating (40b) of the second false tooth (40), when the second seating (40b) is inserted in the third through-hole (44), locking the second false tooth (40) and the second fastening member (42) to one another.

The above-mentioned configurations advantageously ensure a stable and secure fastening of the first false tooth (29) and the second false tooth (42) to the first joint end (4) and the second joint end (13) of the looped cogged belt (1).

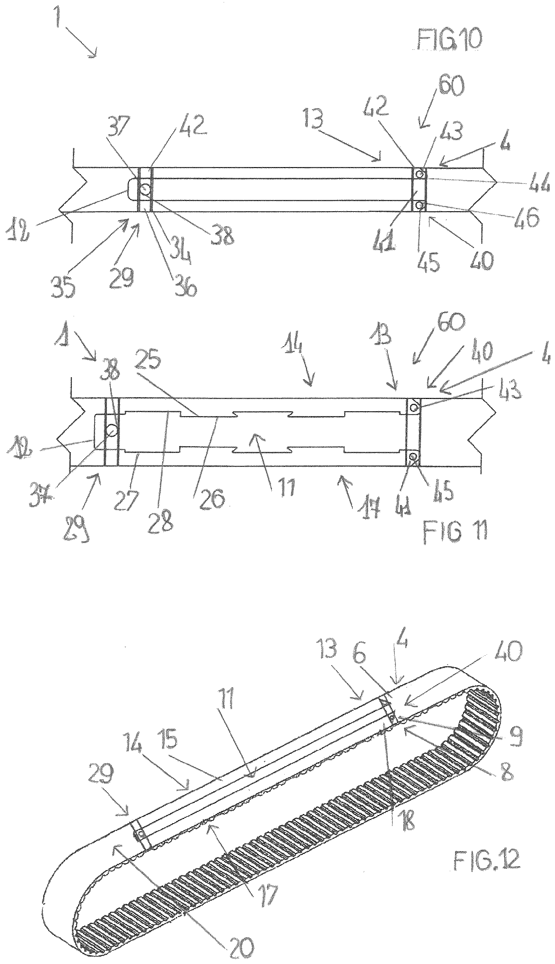

The looped cogged belt (1) with openable joint (60) preferably comprises a third locking element (45) for locking the second false tooth (40) and the second fastening member (42) against the first joint end (4) and the second joint end (13), when the first joint end (4) and the second joint end (13) are coupled to one another, so as to obtain the fastening of the first joint end (4) and the second joint end (13) to one another; the second joint end (13) is provided with a fifth through-hole (46) afforded at the second smooth area (41); wherein the second false tooth (40) comprises a third seating (40c) for receiving the third locking element (45); the third seating (40c) projects from the relative second base (40a) and is insertable in the fifth through-hole (46) of the second joint end (13); the second fastening member (42) is provided with a sixth through-hole (52) and is positioned opposite the second false tooth (40) so that the sixth through-hole (52) is coaxial to the fifth through-hole (46) so that the third locking element (45) can insert in the sixth through-hole (52) and in the third seating (40c) of the second false tooth (40), when the third seating (40c) is inserted in the fifth through-hole (46), locking the second false tooth (40) and the second fastening member (42) to one another (see figure 10).

The third joint portion (11) can have a shorter width than the width of the whole looped cogged belt (1) (see figures 4 and 5).

The fourth joint portion (14) can have a shorter width than the width of the whole looped cogged belt (1) (see figures 4 and 5).

The fifth joint portion (17) can have a shorter width than the width of the whole looped cogged belt (1) (see figures 4 and 5).

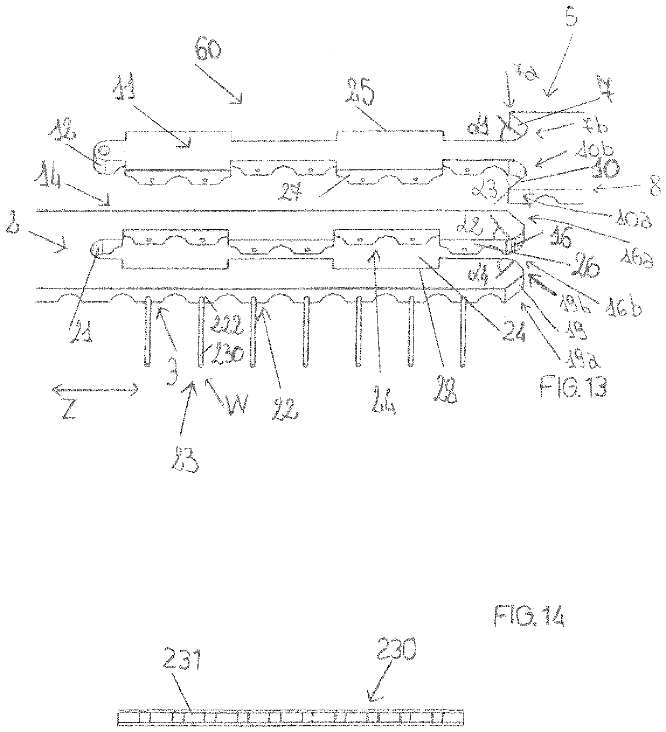

The fourth joint portion (14) and the fifth joint portion (17) can define between them a space (24) into which the third joint portion (11) inserts when the first joint end (4) and the second joint end (13) are coupled to one another (see figure 13).

When the first joint end (4) and the second joint end (13) are coupled to one another, the first joint end (4) and the second joint end (13) can extend to define the width of the whole looped cogged belt (1) (see figures 4, 5 and 12).

With reference to figure 4, the openable joint (60) comprises the first joint end (4) and the second joint end (13).

The first joint end (4) and the second joint end (13) can join two parts of the looped cogged belt (1) (see figure 12).

With reference to figure 5, each tooth (30) of the plurality of teeth (3) of the looped cogged belt (1) arranged at the first joint end (4) and the second joint end (13), when the first joint end (4) and the second joint end (13) are coupled to one another, comprises a relative first part (31) of tooth (30) which is part of the fourth joint portion (14), a relative second part (32) of tooth (30) which is part of the third joint portion (11) and a relative third part (33) of tooth (30) which is part of the fifth joint portion (17).

The first part (31) of tooth (30), the second part (32) of tooth (30) and the third part (33) of tooth (30), when the first joint end (4) and the second joint end (13) are coupled to one another, can constitute a tooth (30) of the plurality of teeth (3) of the looped cogged belt (1), thus restoring the continuity of the teeth of the plurality of teeth (3) of the looped cogged belt (1) (see figure 5).

The plurality of through-holes (22) is preferably made in the teeth of the plurality of teeth (3) of the first joint end (4) and of the second joint end (13) perpendicularly to the extension direction (Z) of the looped cogged belt (1).

Figure 5 illustrates the through-holes of the plurality of through-holes (22) in a broken line.

Each cable (230) of the plurality of cables (23) preferably has a rough external surface (231) for increasing the relative friction with each through-hole (220) of the plurality of through-holes (22) when the cable (230) of the plurality of cables (23) is inserted in the same through-hole (220) of the plurality of through-holes (22) (see figure 14).

The increase of the friction of each cable (230) of the plurality of cables (23) and each through-hole (220) of the plurality of through-holes (22) advantageously limits the sliding of each cable (230) along the relative through-hole (220).

In other words, when, by effect of the excessive traction force to which the looped cogged belt (1) is subjected, each cable (230) of the plurality of cables (23), inserted in the relative through-hole (220) of the plurality of through-holes (22), tends to slide along the same through-hole (220) in order to reach the region of looped cogged belt (1) subjected to the lowest traction force, the relative rough external surface (231) increases the friction between each cable (230) and the relative through-hole (220) and, consequently, limits the sliding thereof.

Each cable (230) of the plurality of cables (23) can be made of metal.

The third joint portion (11) preferably comprises a first lateral wall (25) which connects the first front wall (7) and the third front wall (12) to one another; the first front wall (7) is inclined with respect to the first lateral wall (25) by an acute angle α1; the fourth joint portion (14) comprises a second lateral wall (26) which connects the fourth front wall (16) and the sixth front wall (21) to one another; the fourth front wall (16) is inclined with respect to the second lateral wall (26) by an acute angle α2. The acute angle α1 is larger than or equal to the acute angle α2 (see figure 13).

As the acute angle α1 is larger than or equal to the acute angle α2, the wedging of the fourth joint portion (14) between the first joint portion (5) and the third joint portion (11) is advantageously ensured.

The acute angle α1 can be comprised between 30° and 60° and the acute angle α2 can be comprised between 30° and 60°.

The acute angle α1 is preferably equal to the acute angle α2 and is 45° (see figure 13).

The third joint portion (11) preferably comprises a third lateral wall (27), opposite the first wall lateral (25), which connects the second front wall (10) and the third front wall (12) to one another; the second front wall (10) is inclined with respect to the third lateral wall (27) by an acute angle α3; the fifth joint portion (17) comprises a fourth lateral wall (28) which connects the fifth front wall (19) and the sixth front wall (21) to one another; the fifth front wall (19) is inclined with respect to the fourth lateral wall (28) by an acute angle α4. The acute angle α3 is larger than or equal to the acute angle α4 (see figure 13).

As the acute angle α3 is larger than or equal to the acute angle α4 the wedging of the fifth joint portion (17) between the second joint portion (8) and the third joint portion (11) is advantageously ensured.

The acute angle α3 can be comprised between 30° and 60° and the acute angle α4 can be comprised between 30° and 60°.

The acute angle α3 is preferably equal to the acute angle α4 and is 45° (see figure 13).

With particular reference to figure 13, the first front wall (7) comprises a first portion (7a) having a straight extension axis and a second portion (7b) having a curved extension axis. The straight extension axis of the first portion (7a) of the first front wall (7) is inclined with respect to the first lateral wall (25) by angle α1.

The second front wall (10) comprises a first portion (10a) having a straight extension axis and a second portion (10b) having a curved extension axis.

The straight extension axis of the first portion (10a) of the second front wall (10) is inclined with respect to the third lateral wall (27) by an acute angle α3.

The fourth front wall (16) comprises a first portion (16a) having a straight extension axis and a second portion (16b) having a curved extension axis. The straight extension axis of the first portion (16a) of the fourth front wall (16) is inclined with respect to the second lateral wall (26) by angle α2.

The fifth front wall (19) comprises a first portion (19a) having a straight extension axis and a second portion (19b) having a curved extension axis. The straight extension axis of the first portion (19a) of the fifth front wall (19) is inclined with respect to the fourth lateral wall (28) by angle α4.

The relative coupling between the second portion (7b) of the first front wall (7) and the second portion (16b) of the fourth front wall (16) ensures the wedging of the fourth joint portion (14) between the first joint portion (5) and the third joint portion (11) and the curved conformation limits the movement of the fourth front wall (16) during the use of the looped cogged belt (1) with the openable joint (60).

Further, the relative coupling between the second portion (10b) of the second front wall (10) and the second portion (19b) of the fifth front wall (19) ensures the wedging of the fifth joint portion (17) between the second joint portion (8) and the third joint portion (11) and the curved conformation limits the movement of the fifth front wall (19) during the use of the looped cogged belt (1) with the openable joint (60). In other words, the curved conformation limits the movement of the fourth front wall (16) at the first front wall (7) and the movement of the fifth front wall (19) at the second front wall (10), once coupled to one another, during the winding of the first joint end (4) and the second joint end (5) on the cogged pulley about which the looped cogged belt (1) is arranged.

When the acute angle α1 is equal to the acute angle α2 and the acute angle α3 is equal to the acute angle α4, there is a perfect complementarity between the first joint end (4) and the second joint end (13).

The looped cogged belt (1) with the openable joint (10) preferably comprises an anti-abrasive rubber layer (not illustrated) arranged on the base layer (2) so that the base layer (2) is interposed between the anti-abrasive rubber layer and the plurality of teeth (3) of the looped cogged belt (1).

The anti-abrasive rubber layer arranged on the external surface of the looped cogged belt (1) advantageously ensures a reliable synchronous/asynchronous transport of articles.

Further, the base layer (2) can be made of a woven textile and the looped cogged belt (1) with the openable joint (60) can comprise a plurality of longitudinal metal cables (not illustrated) which extend parallel with respect to the extension axis of the looped cogged belt (1) and which are sunk into the base layer (2).

The plurality of longitudinal metal cables advantageously reinforces the base layer (2) of the looped cogged belt (1).

Each cable (230) of the plurality of cables (23) preferably extends transversally to the extension direction (Z) of the looped cogged belt (1) over the whole width of the looped cogged belt (1).

Figure 11 illustrates a further embodiment of the looped cogged belt (1) with an openable joint (60).

With reference to figure 11, the first lateral wall (25) and the second lateral wall (26) have projections that extend towards the outside with respect to the third joint portion (11).

In the same way, the third lateral wall (27) and the fourth lateral wall (28) have projections that extend towards the outside with respect to the third joint portion (11).

It is understood that the above has been described by way of non-limiting example and that any constructional variants are considered to fall within the protective scope of the present technical solution, as claimed in the following.

## Claims

1. A looped cogged belt (1) with an openable joint (60), wherein:
it comprises a base layer (2) and a plurality of teeth (3) that emerge from the base layer (2);
it comprises a first joint end (4) which comprises: a first joint portion (5) which forms a first flank (6) of the first joint end (4) and which comprises a first front wall (7); a second joint portion (8) which forms a second flank (9), opposite the first flank (6) of the first joint end (4), and which comprises a second front wall (10); a third joint portion (11) which is interposed between the first joint portion (5) and the second joint portion (8), which projects longitudinally with respect to the first joint portion (5) and to the second joint portion (8) and which comprises a third front wall (12); it comprises a second joint end (13) which comprises: a fourth joint portion (14) which forms a third flank (15) of the second joint end (13) and which comprises a fourth front wall (16); a fifth joint portion (17) which forms a fourth flank (18), opposite the third flank (15) of the second joint end (13) and which comprises a fifth front wall (19); a sixth joint portion (20) which is interposed between the fourth joint portion (14) and the fifth joint portion (17) and which comprises a sixth front wall (21);
the fourth joint portion (14) and the fifth joint portion (17) project longitudinally with respect to the sixth joint portion (20);
the first joint end (4) and the second joint end (13) are complementary to one another and are couplable to one another so that the first front wall (7) abuts the fourth front wall (16), the second front wall (10) abuts the fifth front wall (19) and the third front wall (12) abuts the sixth front wall (21) so that the cogged belt (1) is loop-closed;
it comprises a plurality of through-holes (22) which are afforded in the teeth of the plurality of teeth (3) of the first joint end (4) and of the second joint end (13) transversally to the extension direction (Z) of the looped cogged belt (1);
it comprises a plurality of cables (23) which are insertable in the through-holes of the plurality of through-holes (22) so as to fix the first joint end (4) and the second joint end (13) to one another when the first joint end (4) and the second joint end (13) are coupled to one another;
and it is **characterised in that**:
it comprises a first false tooth (29);
the first joint end (4) and the second joint end (13) are provided with a first smooth area (34) for receiving in abutment the first false tooth (29) and thus re-establishing the continuity of the teeth of the plurality of teeth (3), the first smooth area (34) being arranged in proximity of the third front wall (12) and extending through the fourth joint portion (14), the third joint portion (11) and the fifth joint portion (17);
it comprises first fastening means (35) for fixing the first false tooth (29) to the first smooth area (34) when the first joint end (4) and the second joint end (13) are coupled to one another, so as to obtain the fastening of the first joint end (4) and the second joint end (13) to one another;
it comprises a second false tooth (40);
the first joint end (4) and the second joint end (13) are provided with a second smooth area (41) for receiving in abutment the second false tooth (40) and thus re-establishing the continuity of the teeth of the plurality of teeth (3), the second smooth area (41) being arranged in proximity of the fourth front wall (16) and the fifth front wall (19) and extending through the fourth joint portion (14), the third joint portion (11) and the fifth joint portion (17);
it comprises second fastening means (50) for fixing the second false tooth (40) to the second smooth area (41) when the first joint end (4) and the second joint end (13) are coupled to one another, so as to obtain the fastening of the first joint end (4) and the second joint end (13) to one another;
the false teeth comprised are exclusively the first false tooth (29) and the second false tooth (40).

2. The looped cogged belt (1) with an openable joint (60) of the preceding claim, wherein: it comprises a first fastening member (36) which is positionable opposite the first false tooth (29) when the first joint end (4) and the second joint end (13) are coupled to one another in such a way that the first joint end (4) and the second joint end (13) are interposed between the first false tooth (29) and the first fastening member (36); it comprises a first locking element (37) for locking the first false tooth (29) and the first fastening member (36) against the first joint end (4) and the second joint end (13) when the first joint end (4) and the second joint end (13) are coupled to one another, so as to obtain the fastening of the first joint end (4) and the second joint end (13) to one another.

3. The looped cogged belt (1) with an openable joint (60) of any one of the preceding claims, wherein: it comprises a second fastening member (42) which is positionable opposite the second false tooth (40) when the first joint end (4) and the second joint end (13) are coupled to one another in such a way that the first joint end (4) and the second joint end (13) are interposed between the second false tooth (40) and the second fastening member (42); it comprises a second locking element (43) for locking the second false tooth (40) and the second fastening member (42) against the first joint end (4) and the second joint end (13) when the first joint end (4) and the second joint end (13) are coupled to one another, so as to obtain the fastening of the first joint end (4) and the second joint end (13) to one another.

4. The looped cogged belt (1) with an openable joint (60) of claim 2, wherein: the first joint end (4) or the second joint end (13) is provided with a first through-hole (38) afforded at the first smooth area (34); wherein the first false tooth (29) comprises a first base (29a) which forms a tooth of the plurality of teeth (3) of the looped cogged belt (1) and a first seating (29b) for receiving the first locking element (37); the first seating (29b) projects from the relative first base (29a) and is insertable in the first through-hole (38) of the first joint end (4) or of the second joint end (13); the first fastening member (36) is provided with a second through-hole (39) and is positioned opposite the first false tooth (29) so that the second through-hole (39) is coaxial to the first through-hole (38) so that the first locking element (37) can insert in the second through-hole (39) and in the first seating (29b) of the first false tooth (29), when the first seating (29b) is inserted in the first through-hole (38), locking the first false tooth (29) and the first fastening member (36) to one another.

5. The looped cogged belt (1) with an openable joint (60) of claim 3, wherein: the second joint end (13) is provided with a third through-hole (44) afforded at the second smooth area (41); wherein the second false tooth (40) comprises a second base (40a) which forms a tooth of the plurality of teeth (3) of the looped cogged belt (1) and a second seating (40b) for receiving the second locking element (43); the second seating (40b) projects from the relative second base (40a) and is insertable in the third through-hole (44) of the second joint end (13); the second fastening member (42) is provided with a fourth through-hole (51) and is positioned opposite the second false tooth (40) so that the fourth through-hole (51) is coaxial to the third through-hole (44) so that the second locking element (43) can insert in the third through-hole (44) and in the second seating (40b) of the second false tooth (40), when the second seating (40b) is inserted in the third through-hole (44), locking the second false tooth (40) and the second fastening member (42) to one another.

6. The looped cogged belt (1) with an openable joint (60) of the preceding claim, wherein: it comprises a third locking element (45) for locking the second false tooth (40) and the second fastening member (42) against the first joint end (4) and the second joint end (13), when the first joint end (4) and the second joint end (13) are coupled to one another, so as to obtain the fastening of the first joint end (4) and the second joint end (13) to one another; the second joint end (13) is provided with a fifth through-hole (46) afforded at the second smooth area (41); wherein the second false tooth (40) comprises a third seating (40c) for receiving the third locking element (45); the third seating (40c) projects from the relative second base (40a) and is insertable in the fifth through-hole (46) of the second joint end (13); the second fastening member (42) is provided with a sixth through-hole (52) and is positioned opposite the second false tooth (40) so that the sixth through-hole (52) is coaxial to the fifth through-hole (46) so that the third locking element (45) can insert in the sixth through-hole (52) and in the third seating (40c) of the second false tooth (40), when the third seating (40c) is inserted in the fifth through-hole (46), locking the second false tooth (40) and the second fastening member (42) to one another.

7. The looped cogged belt (1) with an openable joint (60) of any one of the preceding claims, wherein each cable (230) of the plurality of cables (23) has a rough external surface (231) for increasing the relative friction with each through-hole (220) of the plurality of through-holes (22) when the cable (230) of the plurality of cables (23) is inserted in the same through-hole (220) of the plurality of through-holes (22).

8. The looped cogged belt (1) with an openable joint (60) of any one of the preceding claims, wherein:
the third joint portion (11) comprises a first lateral wall (25) which connects the first front wall (7) and the third front wall (12) to one another;
the first front wall (7) is inclined with respect to the first lateral wall (25) by an acute angle α1;
the fourth joint portion (14) comprises a second lateral wall (26) which connects the fourth front wall (16) and the sixth front wall (21) to one another;
the fourth front wall (16) is inclined with respect to the second lateral wall (26) by an acute angle α2;
the acute angle α1 is larger than or equal to the acute angle α2.

9. The looped cogged belt (1) with an openable joint (60) of the preceding claim, wherein:
the third joint portion (11) comprises a third lateral wall (27), opposite the first wall lateral (25), which connects the second front wall (10) and the third front wall (12) to one another;
the second front wall (10) is inclined with respect to the third lateral wall by an acute angle α3;
the fifth joint portion (17) comprises a fourth lateral wall (28) which connects the fifth front wall (19) and the sixth front wall (21) to one another;
the fifth front wall (19) is inclined with respect to the fourth lateral wall (28) by an acute angle α4;
the acute angle α3 is larger than or equal to the acute angle α4.

10. The looped cogged belt (1) with an openable joint (60) of any one of the preceding claims, comprising an anti-abrasive rubber layer arranged on the base layer (2) so that base layer (2) is interposed between the anti-abrasive rubber layer and the plurality of teeth (3) of the looped cogged belt (1).

## Patentansprüche

1. Endloszahnriemen (1) mit einer zu öffnenden Verbindung (60), wobei:
er eine Unterlage (2) und eine Vielzahl von Zähnen (3) umfasst, die von der Unterlage (2) hervorragen;
er ein erstes Verbindungsende (4) umfasst, das Folgendes beinhaltet: einen ersten Verbindungsabschnitt (5), der eine erste Flanke (6) des ersten Verbindungsendes (4) bildet und der eine erste Stirnwand (7) umfasst; einen zweiten Verbindungsabschnitt (8), der einer zweite Flanke (9) bildet, die der ersten Flanke (6) des ersten Verbindungsendes (4) gegenüberliegt, und der eine zweite Stirnwand (10) umfasst; einen dritten Verbindungsabschnitt (11) der zwischen dem ersten Verbindungsabschnitt (5) und dem zweiten Verbindungsabschnitt (8) angeordnet ist, der in Längsrichtung von dem ersten Verbindungsabschnitt (5) und dem zweiten Verbindungsabschnitt (8) hervorsteht und der eine dritte Stirnwand (12) umfasst; er ein zweites Verbindungsende (13) umfasst, das Folgendes beinhaltet: einen vierten Verbindungsabschnitt (14), der eine dritte Flanke (15) des zweiten Verbindungsendes (13) bildet und der eine vierte Stirnwand (16) umfasst; einen fünften Verbindungsabschnitt (17), der eine vierte Flanke (18) bildet, die der dritten Flanke (15) des zweiten Verbindungsendes (13) gegenüberliegt, und der eine fünfte Stirnwand (19) umfasst; einen sechsten Verbindungsabschnitt (20), der zwischen dem vierten Verbindungsabschnitt (14) und dem fünften Verbindungsabschnitt (17) angeordnet ist und der eine sechste Stirnwand (21) umfasst;
der vierte Verbindungsabschnitt (14) und der fünfte Verbindungsabschnitt (17) in Längsrichtung von dem sechsten Verbindungsabschnitt (20) hervorstehen;
das erste Verbindungsende (4) und das zweite Verbindungsende (13) komplementär zueinander sind und so miteinander koppelbar sind, dass die erste Stirnwand (7) gegen die vierte Stirnwand (16) anliegt, die zweite Stirnwand (10) gegen die fünfte Stirnwand (19) anliegt und die dritte Stirnwand (12) gegen die sechste Stirnwand (21) anliegt, so dass der Zahnriemen (1) zur Endlosschleife geschlossen wird;
er eine Vielzahl von Durchgangslöchern (22) umfasst, die in den Zähnen der Vielzahl von Zähnen (3) des ersten Verbindungsendes (4) und des zweiten Verbindungsendes (13) quergerichtet zu der Ausdehnungsrichtung (Z) des Endloszahnriemens (1) angefertigt sind;
er eine Vielzahl von Seilen (23) umfasst, die in die Durchgangslöcher der Vielzahl von Durchgangslöchern (22) einführbar sind, um das erste Verbindungsende (4) und das zweite Verbindungsende (13) aneinander zu befestigen, wenn das erste Verbindungsende (4) und das zweite Verbindungsende (13) aneinander gekoppelt sind;
und er **dadurch gekennzeichnet ist, dass**:
er eine erste Einlegeschiene (29) ("false tooth") umfasst;
das erste Verbindungsende (4) und das zweite Verbindungsende (13) einen ersten glatten Bereich (34) aufweisen, um die erste Einlegeschiene (29) anliegend aufzunehmen und somit die Kontinuität der Zähne der Vielzahl von Zähnen (3) wieder herzustellen, wobei der erste glatte Bereich (34) in der Nähe der dritten Stirnwand (12) angeordnet ist und sich über den vierten Verbindungsabschnitt (14), den dritten Verbindungsabschnitt (11) und den fünften Verbindungsabschnitt (17) erstreckt;
er erste Befestigungsmittel (35) umfasst, um die erste Einlegeschiene (29) an dem ersten glatten Bereich (34) zu befestigen, wenn das erste Verbindungsende (4) und das zweite Verbindungsende (13) aneinander gekoppelt sind, so dass die Befestigung des ersten Verbindungsendes (4) und des zweiten Verbindungsendes (13) aneinander erreicht wird;
er eine zweite Einlegeschiene (40) ("false tooth") umfasst;
das erste Verbindungsende (4) und das zweite Verbindungsende (13) einen zweiten glatten Bereich (41) aufweisen, um die zweite Einlegeschiene (40) anliegend aufzunehmen und somit die Kontinuität der Zähne der Vielzahl von Zähnen (3) wieder herzustellen, wobei der zweite glatte Bereich (41) in der Nähe der vierten Stirnwand (16) und der fünften Stirnwand (19) angeordnet ist und sich über den vierten Verbindungsabschnitt (14), den dritten Verbindungsabschnitt (11) und den fünften Verbindungsabschnitt (17) erstreckt;
er zweite Befestigungsmittel (50) umfasst, um die zweite Einlegeschiene (40) an dem zweiten glatten Bereich (41) zu befestigen, wenn das erste Verbindungsende (4) und das zweite Verbindungsende (13) aneinander gekoppelt sind, so dass die Befestigung des ersten Verbindungsendes (4) und des zweiten Verbindungsendes (13) aneinander erreicht wird;
die beinhalteten Einlegeschienen ("false teeth") ausschließlich die erste Einlegeschiene (29) und die zweite Einlegeschiene (40) sind.

2. Endloszahnriemen (1) mit einer zu öffnenden Verbindung (60) nach dem vorhergehenden Anspruch, wobei: er ein erstes Befestigungsorgan (36) umfasst, das gegenüber der ersten Einlegeschiene (29) positionierbar ist, wenn das erste Verbindungsende (4) und das zweite Verbindungsende (13) aneinander gekoppelt sind, so dass das erste Verbindungsende (4) und das zweite Verbindungsende (13) zwischen der ersten Einlegeschiene (29) und dem ersten Befestigungsorgan (36) angeordnet sind; er ein erstes Klemmelement (37) umfasst, um die erste Einlegeschiene (29) und das erste Befestigungsorgan (36) gegen das erste Verbindungsende (4) und das zweite Verbindungsende (13) festzuklemmen, wenn das erste Verbindungsende (4) und das zweite Verbindungsende (13) aneinander gekoppelt sind, so dass die Befestigung des ersten Verbindungsendes (4) und des zweiten Verbindungsendes (13) aneinander erreicht wird.

3. Endloszahnriemen (1) mit einer zu öffnenden Verbindung (60) nach einem der vorhergehenden Ansprüche, wobei: er ein zweites Befestigungsorgan (42) umfasst, das gegenüber der zweiten Einlegeschiene (40) positionierbar ist, wenn das erste Verbindungsende (4) und das zweite Verbindungsende (13) aneinander gekoppelt sind, so dass das erste Verbindungsende (4) und das zweite Verbindungsende (13) zwischen der zweiten Einlegeschiene (40) und dem zweiten Befestigungsorgan (42) angeordnet sind; er ein zweites Klemmelement (43) umfasst, um die zweite Einlegeschiene (40) und das zweite Befestigungsorgan (42) gegen das erste Verbindungsende (4) und das zweite Verbindungsende (13) festzuklemmen, wenn das erste Verbindungsende (4) und das zweite Verbindungsende (13) aneinander gekoppelt sind, so dass die Befestigung des ersten Verbindungsendes (4) und des zweiten Verbindungsendes (13) aneinander erreicht wird.

4. Endloszahnriemen (1) mit einer zu öffnenden Verbindung (60) nach Anspruch 2, wobei: das erste Verbindungsende (4) oder das zweite Verbindungsende (13) ein erstes Durchgangsloch (38) aufweist, das an dem ersten glatten Bereich (34) angefertigt ist; wobei die erste Einlegeschiene (29) eine erste Basis (29a) umfasst, die einen Zahn der Vielzahl von Zähnen (3) des Endloszahnriemens (1) bildet, und einen ersten Sitz (29b) zur Aufnahme des ersten Klemmelements (37); der erste Sitz (29b) von der entsprechenden ersten Basis (29a) hervorsteht und in das erste Durchgangsloch (38) des ersten Verbindungsendes (4) oder des zweiten Verbindungsendes (13) einführbar ist; das erste Befestigungsorgan (36) ein zweites Durchgangsloch (39) aufweist und gegenüber der ersten Einlegeschiene (29) angeordnet ist, so dass das zweite Durchgangsloch (39) koaxial zu dem ersten Durchgangsloch (38) ist, so dass das erste Klemmelement (37) in das zweite Durchgangsloch (39) und in den ersten Sitz (29b) der ersten Einlegeschiene (29) eintreten kann, wenn der erste Sitz (29b) in das erste Durchgangsloch (38) eingeführt ist, so dass die erste Einlegeschiene (29) und das erste Befestigungsorgan (36) aneinander geklemmt sind.

5. Endloszahnriemen (1) mit einer zu öffnenden Verbindung (60) nach Anspruch 3, wobei: das zweite Verbindungsende (13) ein drittes Durchgangsloch (44) aufweist, das an dem zweiten glatten Bereich (41) angefertigt ist; wobei die zweite Einlegeschiene (40) eine zweite Basis (40a) umfasst, die einen Zahn der Vielzahl von Zähnen (3) des Endloszahnriemens (1) bildet, und einen zweiten Sitz (40b) zur Aufnahme des zweiten Klemmelements (43); der zweite Sitz (40b) von der entsprechenden zweiten Basis (40a) hervorsteht und in das dritte Durchgangsloch (44) des zweiten Verbindungsendes (13) einführbar ist; das zweite Befestigungsorgan (42) ein viertes Durchgangsloch (51) aufweist und gegenüber der zweiten Einlegeschiene (40) angeordnet ist, so dass das vierte Durchgangsloch (51) koaxial zu dem dritten Durchgangsloch (44) ist, so dass das zweite Klemmelement (43) in das dritte Durchgangsloch (44) und in den zweiten Sitz (40b) der zweiten Einlegeschiene (40) eintreten kann, wenn der zweite Sitz (40b) in das dritte Durchgangsloch (44) eingeführt ist, so dass die zweite Einlegeschiene (40) und das zweite Befestigungsorgan (42) aneinander geklemmt sind.

6. Endloszahnriemen (1) mit einer zu öffnenden Verbindung (60) nach dem vorhergehenden Anspruch, wobei: er ein drittes Klemmelement (45) umfasst, um die zweite Einlegeschiene (40) und das zweite Befestigungsorgan (42) gegen das erste Verbindungsende (4) und das zweite Verbindungsende (13) festzuklemmen, wenn das erste Verbindungsende (4) und das zweite Verbindungsende (13) aneinander gekoppelt sind, so dass die Befestigung des ersten Verbindungsendes (4) und des zweiten Verbindungsendes (13) aneinander erreicht wird; das zweite Verbindungsende (13) ein fünftes Durchgangsloch (46) aufweist, das an dem zweiten glatten Bereich (41) angefertigt ist; wobei die zweite Einlegeschiene (40) einen dritten Sitz (40c) zur Aufnahme des dritten Klemmelements (45) umfasst; der dritte Sitz (40c) von der entsprechenden zweiten Basis (40a) hervorsteht und in das fünfte Durchgangsloch (46) des zweiten Verbindungsendes (13) einführbar ist; das zweite Befestigungsorgan (42) ein sechstes Durchgangsloch (52) aufweist und gegenüber der zweiten Einlegeschiene (40) angeordnet ist, so dass das sechste Durchgangsloch (52) koaxial zu dem fünften Durchgangsloch (46) ist, so dass das dritte Klemmelement (45) in das sechste Durchgangsloch (52) und in den dritten Sitz (40c) der zweiten Einlegeschiene (40) eintreten kann, wenn der dritte Sitz (40c) in das fünfte Durchgangsloch (46) eingeführt ist, so dass die zweite Einlegeschiene (40) und das zweite Befestigungsorgan (42) aneinander geklemmt sind.

7. Endloszahnriemen (1) mit einer zu öffnenden Verbindung (60) nach einem der vorhergehenden Ansprüche, wobei jedes Seil (230) der Vielzahl von Seilen (23) eine raue Außenoberfläche (231) aufweist, um die entsprechende Reibung mit jedem Durchgangsloch (220) der Vielzahl von Durchgangslöchern (22) zu erhöhen, wenn das Seil (230) der Vielzahl von Seilen (23) in selbiges Durchgangsloch (220) der Vielzahl von Durchgangslöchern (22) eingeführt ist.

8. Endloszahnriemen (1) mit einer zu öffnenden Verbindung (60) nach einem der vorhergehenden Ansprüche, wobei:
der dritte Verbindungsabschnitt (11) eine erste Seitenwand (25) umfasst, welche die erste Stirnwand (7) und die dritte Stirnwand (12) miteinander verbindet;
die erste Stirnwand (7) relativ zu der ersten Seitenwand (25) um einen spitzen Winkel α1 geneigt ist;
der vierte Verbindungsabschnitt (14) eine zweite Seitenwand (26) umfasst, welche die vierte Stirnwand (16) und die sechste Stirnwand (21) miteinander verbindet;
die vierte Stirnwand (16) relativ zu der zweiten Seitenwand (26) um einen spitzen Winkel α2 geneigt ist;
der spitze Winkel α1 größer oder gleich dem spitzen Winkel α2 ist.

9. Endloszahnriemen (1) mit einer zu öffnenden Verbindung (60) nach dem vorhergehenden Anspruch, wobei:
der dritte Verbindungsabschnitt (11) eine dritte Seitenwand (27), gegenüber der ersten Seitenwand (25) umfasst, welche die zweite Stirnwand (10) und die dritte Stirnwand (12) miteinander verbindet;
die zweite Stirnwand (10) relativ zu der dritten Seitenwand (27) um einen spitzen Winkel α3 geneigt ist;
der fünfte Verbindungsabschnitt (17) eine vierte Seitenwand (28) umfasst, welche die fünfte Stirnwand (19) und die sechste Stirnwand (21) miteinander verbindet;
die fünfte Stirnwand (19) relativ zu der vierten Seitenwand (28) um einen spitzen Winkel α4 geneigt ist;
der spitze Winkel α3 größer oder gleich dem spitzen Winkel α4 ist.

10. Endloszahnriemen (1) mit einer zu öffnenden Verbindung (60) nach einem der vorhergehenden Ansprüche, umfassend eine antiabrasive Gummilage, die auf der Unterlage (2) angeordnet ist, so dass die Unterlage (2) zwischen der antiabrasiven Gummilage und der Vielzahl von Zähnen (3) des Endloszahnriemens (1) angeordnet ist.

## Revendications

1. Une courroie crantée en boucle (1) avec une jonction ouvrable (60), dans laquelle :
elle comprend une couche de base (2) et une pluralité de dents (3) qui se dressent à partir de la couche de base (2) ;
elle comprend une première extrémité de jonction (4) qui comprend : une première portion de jonction (5) qui forme un premier flanc (6) de la première extrémité de jonction (4) et qui comprend une première paroi frontale (7) ; une deuxième portion de jonction (8) qui forme un deuxième flanc (9), opposé au premier flanc (6) de la première extrémité de jonction (4) et qui comprend une deuxième paroi frontale (10) ; une troisième portion de jonction (11) qui est interposée entre la première portion de jonction (5) et la deuxième portion de jonction (8), qui se projette longitudinalement par rapport à la première portion de jonction (5) et à la deuxième portion de jonction (8) et qui comprend une troisième paroi frontale (12) ; elle comprend une deuxième extrémité de jonction (13) qui comprend : une quatrième portion de jonction (14) qui forme un troisième flanc (15) de la deuxième extrémité de jonction (13) et qui comprend une quatrième paroi frontale (16) ; une cinquième portion de jonction (17) qui forme un quatrième flanc (18), opposé au troisième flanc (15) de la deuxième extrémité de jonction (13) et qui comprend une cinquième paroi frontale (19) ; une sixième portion de jonction (20) qui est interposée entre la quatrième portion de jonction (14) et la cinquième portion de jonction (17) et qui comprend une sixième paroi frontale (21) ;
la quatrième portion de jonction (14) et la cinquième portion de jonction (17) se projettent longitudinalement par rapport à la sixième portion de jonction (20) ;
la première extrémité de jonction (4) et la deuxième extrémité de jonction (13) sont complémentaires entre elles et peuvent être accouplées l'une avec l'autre de manière à ce que la première paroi frontale (7) rencontre la quatrième paroi frontale (16), la deuxième paroi frontale (10) rencontre la cinquième paroi frontale (19) et la troisième paroi frontale (12) rencontre la sixième paroi frontale (21) afin que la courroie crantée (1) soit fermée en boucle ;
elle comprend une pluralité de trous traversants (22) qui sont réalisés dans les dents de la pluralité de dents (3) de la première extrémité de jonction (4) et de la deuxième extrémité de jonction (13) transversalement à la direction d'extension (Z) de la courroie crantée en boucle (1) ;
elle comprend une pluralité de câbles (23) qui peuvent être insérés dans les trous traversants de la pluralité de trous traversants (22) de manière à fixer la première extrémité de jonction (4) et la deuxième extrémité de jonction (13) l'une à l'autre lorsque la première extrémité de jonction (4) et la deuxième extrémité de jonction (13) sont accouplées l'une avec l'autre ;
et elle est **caractérisée en ce que** :
elle comprend une première fausse dent (29) ;
la première extrémité de jonction (4) et la deuxième extrémité de jonction (13) sont munies d'une première zone aplanie (34) pour recevoir en butée la première fausse dent (29) et rétablir ainsi la continuité des dents de la pluralité de dents (3), la première zone aplanie (34) étant disposée à proximité de la troisième paroi frontale (12) et s'étendant à travers la quatrième portion de jonction (14), la troisième portion de jonction (11) et la cinquième portion de jonction (17) ;
elle comprend des premiers moyens de fixation (35) pour fixer la première fausse dent (29) à la première zone aplanie (34) lorsque la première extrémité de jonction (4) et la deuxième extrémité de jonction (13) sont accouplées l'une avec l'autre, de manière à obtenir la fixation de la première extrémité de jonction (4) et de la deuxième extrémité de jonction (13) l'une à l'autre ;
elle comprend une deuxième fausse dent (40) ;
la première extrémité de jonction (4) et la deuxième extrémité de jonction (13) sont munies d'une deuxième zone aplanie (41) pour recevoir en butée la deuxième fausse dent (40) et rétablir ainsi la continuité des dents de la pluralité de dents (3), la deuxième zone aplanie (41) étant disposée à proximité de la quatrième paroi frontale (16) et de la cinquième paroi frontale (19) et s'étendant à travers la quatrième portion de jonction (14), la troisième portion de jonction (11) et la cinquième portion de jonction (17) ;
elle comprend des deuxièmes moyens de fixation (50) pour fixer la deuxième fausse dent (40) à la deuxième zone aplanie (41) lorsque la première extrémité de jonction (4) et la deuxième extrémité de jonction (13) sont accouplées l'une avec l'autre, de manière à obtenir la fixation de la première extrémité de jonction (4) et de la deuxième extrémité de jonction (13) l'une à l'autre ;
les fausses dents comprises sont exclusivement la première fausse dent (29) et la deuxième fausse dent (40).

2. La courroie crantée en boucle (1) avec une jonction ouvrable (60) selon la revendication précédente, dans laquelle : elle comprend un premier organe de fixation (36) qui peut être positionné opposé à la première fausse dent (29) lorsque la première extrémité de jonction (4) et la deuxième extrémité de jonction (13) sont accouplées l'une avec l'autre de manière à ce que la première extrémité de jonction (4) et la deuxième extrémité de jonction (13) soient interposées entre la première fausse dent (29) et le premier organe de fixation (36) ; elle comprend un premier élément de blocage (37) pour bloquer la première fausse dent (29) et le premier organe de fixation (36) contre la première extrémité de jonction (4) et la deuxième extrémité de jonction (13) lorsque la première extrémité de jonction (4) et la deuxième extrémité de jonction (13) sont accouplées l'une avec l'autre, de manière à obtenir la fixation de la première extrémité de jonction (4) et de la deuxième extrémité de jonction (13) l'une à l'autre.

3. La courroie crantée en boucle (1) avec une jonction ouvrable (60) selon l'une quelconque des revendications précédentes, dans laquelle : elle comprend un deuxième organe de fixation (42) qui peut être positionné opposé à la deuxième fausse dent (40) lorsque la première extrémité de jonction (4) et la deuxième extrémité de jonction (13) sont accouplées l'une avec l'autre de manière à ce que la première extrémité de jonction (4) et la deuxième extrémité de jonction (13) soient interposées entre la deuxième fausse dent (40) et le deuxième organe de fixation (42) ; elle comprend un deuxième élément de blocage (43) pour bloquer la deuxième fausse dent (40) et le deuxième organe de fixation (42) contre la première extrémité de jonction (4) et la deuxième extrémité de jonction (13) lorsque la première extrémité de jonction (4) et la deuxième extrémité de jonction (13) sont accouplées l'une avec l'autre, de manière à obtenir la fixation de la première extrémité de jonction (4) et de la deuxième extrémité de jonction (13) l'une à l'autre.

4. La courroie crantée en boucle (1) avec une jonction ouvrable (60) selon la revendication 2, dans laquelle : la première extrémité de jonction (4) ou la deuxième extrémité de jonction (13) est munie d'un premier trou traversant (38) réalisé au niveau de la première zone aplanie (34) ; dans laquelle la première fausse dent (29) comprend une première base (29a) qui forme une dent de la pluralité de dents (3) de la courroie crantée en boucle (1) et un premier siège (29b) pour recevoir le premier élément de blocage (37) ; le premier siège (29b) se projette à partir de la première base (29a) correspondante et peut être inséré dans le premier trou traversant (38) de la première extrémité de jonction (4) ou de la deuxième extrémité de jonction (13) ; le premier organe de fixation (36) est muni d'un deuxième trou traversant (39) et est positionné opposé à la première fausse dent (29) de manière à ce que le deuxième trou traversant (39) soit coaxial au premier trou traversant (38) afin que le premier élément de blocage (37) puisse s'insérer dans le deuxième trou traversant (39) et dans le premier siège (29b) de la première fausse dent (29), lorsque le premier siège (29b) est inséré dans le premier trou traversant (38), bloquant la première fausse dent (29) et le premier organe de fixation (36) l'un à l'autre.

5. La courroie crantée en boucle (1) avec une jonction ouvrable (60) selon la revendication 3, dans laquelle : la deuxième extrémité de jonction (13) est munie d'un troisième trou traversant (44) réalisé au niveau de la deuxième zone aplanie (41) ; dans laquelle la deuxième fausse dent (40) comprend une deuxième base (40a) qui forme une dent de la pluralité de dents (3) de la courroie crantée en boucle (1) et un deuxième siège (40b) pour recevoir le deuxième élément de blocage (43) ; le deuxième siège (40b) se projette à partir de la deuxième base (40a) correspondante et peut être inséré dans le troisième trou traversant (44) de la deuxième extrémité de jonction (13) ; le deuxième organe de fixation (42) est muni d'un quatrième trou traversant (51) et est positionné opposé à la deuxième fausse dent (40) de manière à ce que le quatrième trou traversant (51) soit coaxial au troisième trou traversant (44) afin que le deuxième élément de blocage (43) puisse s'insérer dans le troisième trou traversant (44) et dans le deuxième siège (40b) de la deuxième fausse dent (40), lorsque le deuxième siège (40b) est inséré dans le troisième trou traversant (44), bloquant la deuxième fausse dent (40) et le deuxième organe de fixation (42) l'un à l'autre.

6. La courroie crantée en boucle (1) avec une jonction ouvrable (60) selon la revendication précédente, dans laquelle : elle comprend un troisième élément de blocage (45) pour bloquer la deuxième fausse dent (40) et le deuxième organe de fixation (42) contre la première extrémité de jonction (4) et la deuxième extrémité de jonction (13), lorsque la première extrémité de jonction (4) et la deuxième extrémité de jonction (13) sont accouplées l'une avec l'autre, de manière à obtenir la fixation de la première extrémité de jonction (4) et de la deuxième extrémité de jonction (13) l'une à l'autre ; la deuxième extrémité de jonction (13) est munie d'un cinquième trou traversant (46) réalisé au niveau de la deuxième zone aplanie (41) ; dans laquelle la deuxième fausse dent (40) comprend un troisième siège (40c) pour recevoir le troisième élément de blocage (45) ; le troisième siège (40c) se projette à partir de la deuxième base (40a) correspondante et peut être inséré dans le cinquième trou traversant (46) de la deuxième extrémité de jonction (13) ; le deuxième organe de fixation (42) est muni d'un sixième trou traversant (52) et est positionné opposé à la deuxième fausse dent (40) de manière à ce que le sixième trou traversant (52) soit coaxial au cinquième trou traversant (46) afin que le troisième élément de blocage (45) puisse s'insérer dans le sixième trou traversant (52) et dans le troisième siège (40c) de la deuxième fausse dent (40), lorsque le troisième siège (40c) est inséré dans le cinquième trou traversant (46), bloquant la deuxième fausse dent (40) et le deuxième organe de fixation (42) l'un à l'autre.

7. La courroie crantée en boucle (1) avec une jonction ouvrable (60) selon l'une quelconque des revendications précédentes, dans laquelle chaque câble (230) de la pluralité de câbles (23) a une surface extérieure rugueuse (231) pour augmenter le frottement relatif avec chaque trou traversant (220) de la pluralité de trous traversants (22) lorsque le câble (230) de la pluralité de câbles (23) est inséré dans le même trou traversant (220) de la pluralité de trous traversants (22).

8. La courroie crantée en boucle (1) avec une jonction ouvrable (60) selon l'une quelconque des revendications précédentes, dans laquelle :
la troisième portion de jonction (11) comprend une première paroi latérale (25) qui raccorde la première paroi frontale (7) et la troisième paroi frontale (12) l'une à l'autre ;
la première paroi frontale (7) est inclinée par rapport à la première paroi latérale (25) d'un angle aigu α1;
la quatrième portion de jonction (14) comprend une deuxième paroi latérale (26) qui raccorde la quatrième paroi frontale (16) et la sixième paroi frontale (21) l'une à l'autre ;
la quatrième paroi frontale (16) est inclinée par rapport à la deuxième paroi latérale (26) d'un angle aigu α2 ;
l'angle aigu α1 est supérieur ou égal à l'angle aigu α2.

9. La courroie crantée en boucle (1) avec une jonction ouvrable (60) selon la revendication précédente, dans laquelle :
la troisième portion de jonction (11) comprend une troisième paroi latérale (27), opposée à la première paroi latérale (25), qui raccorde la deuxième paroi frontale (10) et la troisième paroi frontale (12) l'une à l'autre ;
la deuxième paroi frontale (10) est inclinée par rapport à la troisième paroi latérale (27) d'un angle aigu α3 ;
la cinquième portion de jonction (17) comprend une quatrième paroi latérale (28) qui raccorde la cinquième paroi frontale (19) et la sixième paroi frontale (21) l'une à l'autre ;
la cinquième paroi frontale (19) est inclinée par rapport à la quatrième paroi latérale (28) d'un angle aigu α4 ;
l'angle aigu α3 est supérieur ou égal à l'angle aigu α4.

10. La courroie crantée en boucle (1) avec une jonction ouvrable (60) selon l'une quelconque des revendications précédentes, comprenant une couche de caoutchouc anti-abrasif disposée sur la couche de base (2) de manière à ce que la couche de base (2) soit interposée entre la couche de caoutchouc anti-abrasif et la pluralité de dents (3) de la courroie crantée en boucle (1).
